(19)

**Europäisches Patentamt**
**European Patent Office**
**Office européen des brevets**

(11)  **EP 4 418 609 A1**

(12) **EUROPEAN PATENT APPLICATION**

(43) Date of publication:
**21.08.2024 Bulletin 2024/34**

(21) Application number: **23156782.7**

(22) Date of filing: **15.02.2023**

(51) International Patent Classification (IPC):
***H04L 9/40*** *(2022.01)*

(52) Cooperative Patent Classification (CPC):
**H04L 63/1441; G06F 21/554; G06F 21/577;
H04L 63/1433**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **British Telecommunications public
limited company
London E1 8EE (GB)**

(72) Inventor: **The designation of the inventor has not
yet been filed**

(74) Representative: **British Telecommunications
public limited company
Intellectual Property Department
9th Floor
One Braham
Braham Street
London E1 8EE (GB)**

(54) **ACTION PRIORITISATION RECOMMENDATION**

(57)    A computer-implemented method is provided for providing an action prioritisation recommendation in response to a cyber attack on a system comprising one or more hosts is provided, the method comprising steps of: determining a plurality of host attack impact scores for attacks on one or more hosts, each host attack impact score being determined based on the severity of the corresponding attack and an importance of the targeted host; determining a plurality of action impact scores for actions that are available to be executed in response to each of the attacks, each action impact score being determined based on the effectiveness of the corresponding action and a type of action of the corresponding action; determining a plurality of action deployment complexity scores for each of the corresponding actions; and determining a priority score for each of the actions based on the host attack impact score, the action impact score, and the action deployment complexity score; and generating the action prioritisation recommendation providing a recommended sequence for executing the actions, wherein the recommended sequence prioritises the actions according to the priority scores. A corresponding computer system and computer program are also provided.

FIG 1

EP 4 418 609 A1

**Description**

TECHNICAL FIELD

The invention relates to a computer-implemented method for use in providing an action prioritisation recommendation along with a corresponding computer system and computer program.

BACKGROUND

Intrusion response systems (IRSs) mitigate cyber attacks detected by intrusion detections systems (IDSs). IRSs can be categorised into active IRSs and passive IRSs depending on the types of responses they execute in response to cyber attacks. A passive IRS aims to notify and alert other parties to the occurrence of an intrusion and is dependant on these parties to take further actions in response to the detected cyber attacks. An active IRS automatically generates an action, without human involvement, to reduce the effects of the intrusion. Active IRSs can be built on a knowledge driven approach (KDA) or data-driven approach (DDA). A KDA is an adaptive approach, which provides collective wisdom from historical experiences, whereas a DDA provides inference or predictions for tackling specific issues based on provided (i.e. issue-specific) data.

In most IRSs, actions for mitigating detected attacks are selected based on attack-response costs, risk-based assessments, or knowledge-based algorithms. The actions are executed immediately after they are informed. However, in many scenarios, multiple actions may be performed, either for a single incident or for a range of incidents. In such cases, sequential execution of actions for mitigating detected attacks does not necessarily lead to an optimal response.

IRSs generally select actions based on attack-response costs, risk-based assessments and knowledge-based algorithms. This prevents selection of appropriate actions based on cost and effectiveness at the same time. In view of this, some existing IRSs have incorporated a selection of multiple actions to detected attacks, and then used action prioritisation techniques to sort the actions according to their set criteria. However, these action prioritisation techniques are knowledge-based, therefore, action priority is decided by relying on previous knowledge collected by experts.

Accordingly, a method of providing an action prioritisation recommendation for prioritising actions more effectively in response to cyber attack(s) is desired.

SUMMARY OF INVENTION

The invention is defined in the independent claims. Optional features are set out in the dependent claims.

Embodiments of the present invention provide a method for providing an action prioritisation recommendation in response to a cyber attack.

According to a first aspect, a method for providing an action prioritisation recommendation in response to one or more cyber attacks on a system comprising one or more hosts is provided, the method comprising steps of: determining a plurality of host attack impact scores for attacks on one or more hosts, each host attack impact score being determined based on the severity of the corresponding attack and an importance of the targeted host; determining a plurality of action impact scores for actions that are available to be executed in response to each of the attacks, each action impact score being determined based on the effectiveness of the corresponding action and a type of action of the corresponding action; determining a plurality of action deployment complexity scores for each of the corresponding actions; and determining a priority score for each of the actions based on the host attack impact score, the action impact score, and the action deployment complexity score; and generating the action prioritisation recommendation providing a recommended sequence for executing the actions, wherein the recommended sequence prioritises the actions according to the priority scores.

Embodiments employ a multi-step prioritisation, where the above described factors are implemented through various stages of the method. In addition, actions can be prioritised and appropriately queued simultaneously for multiple attacks.

The host attack impact score may increase with increasing the severity of attack of the corresponding attack, and the host attack impact score may increase with increasing the importance of the host attacked and/or targeted by the corresponding attack.

The action impact score may increase with increasing the effectiveness of action of the corresponding action, and the action impact score may decrease with increasing level of one or more resources required to execute the type of action of the corresponding action.

The action deployment complexity score may increase with increasing complexity involved in executing the corresponding action.

The priority score may increase with increasing host attack impact score of the corresponding attack, the priority score may increase with increasing action impact score of the corresponding action, and the priority score increases with decreasing action deployment score of the corresponding action.

The recommended sequence may prioritise the actions in a descending order of the priority scores.

Optionally, determining a host attack impact score may comprise the steps of: providing a plurality of host attack impact groups, each of the plurality of host attack impact groups being associated with: a range of attack severity scores, a range of host importance scores, and a host attack impact group score associated with a corresponding host attack impact group; categorising each of the attacks into one of the plurality of host attack impact groups associated with: the range of attack severity scores encompassing the attack severity score of the corresponding attack; and the range of host importance scores encompassing the host importance score of the host targeted by the corresponding attack; and setting the host attack impact group score as the host attack impact score of the corresponding attack.

The attack severity score may increase with increasing the severity of attack.

The host importance score may increase with increasing the importance of host.

Optionally, the host attack impact score is determined by using a host attack impact score graph or a host attack impact score matrix comprising: a first axis representing the attack severity score; a second axis representing the host importance score; and a host attack impact graph plain having a plurality of host attack impact group areas or sectors, each of the host attack impact group areas or sectors being associated with the range of the attack severity scores, the range of the host importance scores, and the host attack impact group score.

Optionally, determining an action impact score may comprise the steps of: providing a plurality of action impact groups, each of the plurality of action impact groups being associated with: a range of effectiveness of action scores, a range of type of action scores, and an action impact group score associated with a corresponding action impact group; categorising each of the actions into one of the plurality of action impact groups associated with: the range of effectiveness of action scores encompassing the effectiveness of action score of the corresponding action; and the range of action type scores encompassing the action type score of the corresponding action; and setting the action impact group score as the action impact score of the corresponding action.

The effectiveness of action score may increase with increasing the effectiveness of action.

The type of action score may increase with increasing level of the one or more resources required to execute the type of action.

Optionally, the action impact score may be determined by using an action impact score graph or an action impact score matrix comprising: a first axis representing the effectiveness of action score; a second axis representing the type of action score; and an action attack impact graph plain having a plurality of action impact group areas, each of the action impact group areas being associated with the range of the effectiveness of the action scores, the range of the type of the action scores, and the action impact group score.

Optionally, the type of action may be selected from one of: passive monitoring, active monitoring, and defensive action, wherein the passive monitoring has lower level of resources required than the active monitoring, and active monitoring has lower level of resources required than the defensive action.

Optionally, the action deployment complexity scores may be based on: computing power required to execute the corresponding action, time required to execute the corresponding action, number of users required to execute the corresponding action, privilege(s) required to execute the corresponding action, and/or level of authorisation required to approve the corresponding action.

Optionally, one or more of: the severity of attack, the importance of the host, the effectiveness of action, the type of action, and the action deployment complexity may be determined based on one or more user inputs, historical data and/or machine learning.

Optionally, the priority score, PRS, may be determined as:

$$PRS = \frac{HAI \times AI}{ADC}$$

wherein *HAI* is the host attack impact score, *AI* is the action impact score, and *ADC* is the action deployment complexity score.

Optionally, the method, prior to determining the priority score, may further comprise a step of: determining a confidence score based on a certainty of the determined host attack impact score and action impact score.

The confidence score may increase with increasing certainty of the determined host attack impact score and action impact score.

Optionally, the priority score, PRS, may be determined as:

$$PRS = \frac{HAI \times AI \times CON}{ADC}$$

wherein *HAI* is the host attack impact score, *AI* is the action impact score, *CON* is the confidence score, and *ADC* is the action deployment complexity score.

Optionally, the method may further comprise a step of executing the actions according to the recommended sequence for executing the actions.

Optionally, the method may further comprise a step of notifying one or more users of the recommended sequence for executing the actions.

According to a second aspect there is provided a computer system configured to carry out the methods of the first aspect.

According to a third aspect, a non-transitory computer readable medium having stored thereon a computer program that, when run on a system according to the second aspect, causes the system to perform methods according to the first aspect.

## BRIEF DESCRIPTION OF THE DRAWINGS

The disclosure will be further described, by way of example only, with reference to the accompanying drawings, in which

Figure 1 illustrates an exemplary action prioritisation model, according to an embodiment;

Figure 2 illustrates a matrix that uses 4 groupings to assign priority based on variables such as importance and urgency or impact and effort;

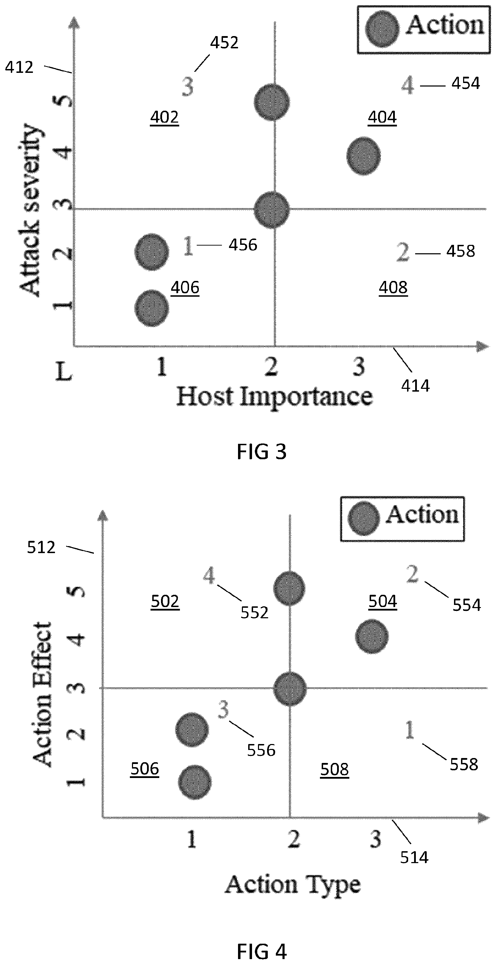

Figure 3 illustrates a priority matrix that uses 4 groupings to assign host attack impact scores based on attack severity scores and host importance scores, according to an embodiment;

Figure 4 illustrates a priority matrix that uses 4 groupings to assign action impact scores based on effectiveness of action scores and action type scores, according to an embodiemnt; and

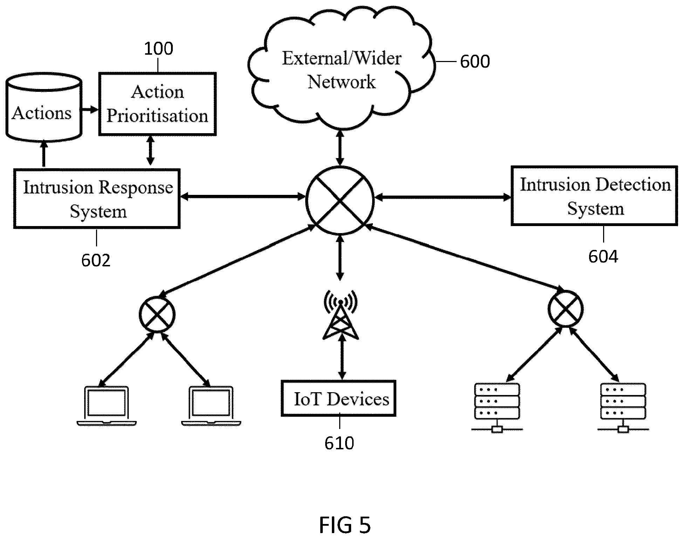

Figure 5 is a schematic diagram illustrating an exemplary network environment, according to an embodiment.

## DETAILED DESCRIPTION OF THE INVENTION

Embodiments and related technology helpful for understanding and implementing the embodiments will now be described with reference to the Figures. The same or similar reference numerals are used to refer to the same or similar components across different Figures.

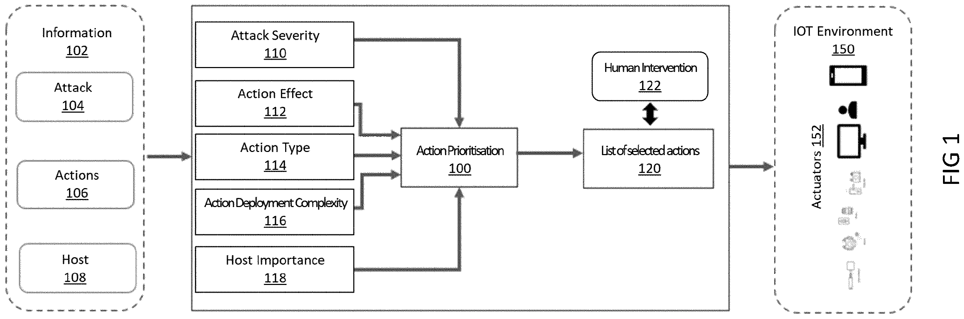

In various embodiments, an action prioritisation is provided by taking into account not only action information, such as action deployment complexity and action impact, but also attack information, such as severity of attack and host importance. Figure 1 illustrates an exemplary action prioritisation model that utilises a method for providing an action prioritisation recommendation in response to a cyber attack according to an embodiment of the present invention. The action prioritisation model may be connected to an external network or be part of a wider network as shown in an example network of Figure . The method for providing the action prioritisation recommendation is discussed with reference to the exemplary action prioritisation model shown in Figure 1.

As shown in Figure 1, the action prioritisation model retrieves information 102 relating to one or more cyber attacks 104, one or more actions to be executed in response to the cyber attacks 106, and one or more hosts targeted by the cyber attacks. Based on the retrieved information 102, the prioritisation model determines impact of the cyber attacks on the targeted hosts, effectiveness of actions that may be executed in response to the cyber attacks, and complexity of executing the actions. By using the determined impact of the cyber attacks, effectiveness of actions, and complexity of executing the actions, the prioritisation model determines (100) an optimal sequence in which the actions can be executed, and generates (120) an action prioritisation recommendation providing the optimal sequence of the actions. Exemplary methods that may be used to determine the impact of cyber attacks, effectiveness of actions, and complexity of executing the actions are described below.

The impact of each of the cyber attacks on each of the hosts targeted by the corresponding cyber attack is defined as "host attack impact". The host attack impact may be determined based on severity of the corresponding cyber attack and the importance of the host targeted by the corresponding cyber attack, and may be expressed in a quantitative form, such as a score (i.e. host attack impact score).

The term "severity of attack" as used herein denotes the seriousness of an attack, and is proportional to the actual damage or potential damage that the attack caused or can cause to a host. Optionally, severity of attack may also be proportional to the number of hosts affected by an attack. Severity of an attack may be expressed in a quantitative form, such as a score (i.e. attack severity score). Severity of an attack may be determined based on one or more user inputs (e.g. an input from an analyst), and/or relevant historical or real-time data. Optionally, a machine learning algorithm may be trained to predict severity of an attack from a dataset of severities of historical cyber attacks.

The term "importance of host" as used herein denotes the significance of the host for device(s), systems(s), and/or network(s) that the host is connected to and/or belongs to, and is proportional to the need for keeping the host running without interruption. Optionally, importance of a host may be dependent on the number of users of the host, type(s) of the users, and traffic volume of the host. For example, if a host or one or more connected systems and/or devices are used by IT personnel or cyber attack analysts who are responsible for responding to cyber attacks, the host may be of high importance. Importance of a host may be expressed in a quantitative form, such as a score (i.e. host importance score). Importance of a host may be determined based on one or more user inputs (e.g. an input from an analyst or administrator of the host), and/or historical or real-time data relating to a number of relevant factors, such as the number of users, type of the users, and traffic volume of the host. Optionally, a machine learning algorithm may be trained to predict importance of a host from the number of users, type of the users, and traffic volume of the host.

Accordingly, the host attack impact scores of each of the attacks may be determined based on the corresponding attack severity score of the corresponding attack and the host importance score of the host targeted by the corresponding attack. Alternatively, the host attack impact scores of each of the attacks may be determined by using a grouped scoring method described below.

The said grouped scoring method for determining host attack impact scores comprises a step of providing a plurality of host attack impact groups. Each of the host attack impact groups are associated with a range of attack severity scores and a range of host importance scores. Each of the host attack impact groups is also associated with a host attack impact group score.

Each of the attacks is then categorised into one of the host attack impact groups based on its attack severity score and host importance score. In other words, each of the attacks is categorised into a host attack impact group that is associated with the range of attack severity scores encompassing the attack severity score of the corresponding attack, and the range of host importance scores encompassing the host importance score of the host targeted by the corresponding attack.

As a result, the host attack impact group score, based on the categorisation, is set as the host attack impact score of the corresponding attack.

Using such a grouped scoring method enables categorisation of the attacks that can be customised and/or dynamically adapted depending on the demand of the host's network.

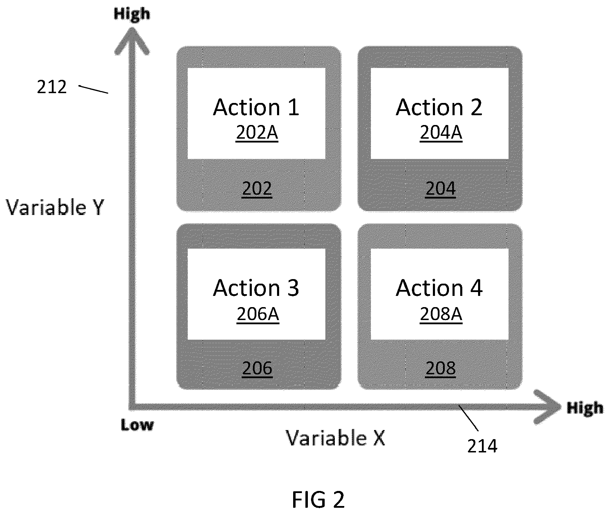

The said grouped scoring method may optionally be performed by using a prioritisation matrix, grid, or graph. For example, a general priority matrix is shown in Figure 2 and may be modified for the purpose of performing the said grouped scoring method. Examples of such matrix include the Eisenhower matrix and an impact-effort matrix.

The scoring matrix shown in Figure 2 uses 4 groups 202, 204, 206, 208 to assign priority based on the values of variable Y 212 and variable X 214 of tasks. Actions 202A, 204A, 206A, 208A can be assigned to tasks based upon the group in which a given task falls. In the example shown in Figure 2, tasks with a high value for variable Y and low value for variable X are assigned to a first group 202, tasks with a high value for variable Y and high value for variable X are assigned to a second group 204, tasks with a low value for variable Y and low value for variable X are assigned to a third group 206, tasks with a low value for variable Y and high value for variable X are assigned to a fourth group 208. Therefore, each of the 4 groups 202, 204, 206, 208 is associated with a range of values for variable X, a range of values for variable Y, and a recommended way to handle the corresponding tasks in the form of actions 202A, 204A, 206A, 208A (e.g. "schedule", "do first", "do not do", and "delegate to another system"). Each of the groups 202, 204, 206, 208 occupies an area on the matrix plain that does not overlap with an area occupied by another group. Using such a matrix helps to decide on and prioritise a plurality of tasks based on factors such as urgency and importance. An Eisenhower matrix, for example, is suitable for prioritising a plurality of tasks in the context of time as it focuses on importance and urgency.

Similarly, a matrix such as that shown in **Error! Reference source not found.** may use the 4 groups 202, 204, 206, 208 to assign priority based on impact (as variable Y) of tasks and effort required to execute tasks (as variable X). Tasks with high impact and low effort are assigned to the first group 202, tasks with high impact and high effort are assigned to the second group 204, tasks with low impact and low effort are assigned to the third group 206, tasks with low impact and high effort are assigned to the fourth group 208. Therefore, each of the 4 groups 202, 204, 206, 208 is associated with a range of impact, a range of effort, and a recommended way 202A, 204A, 206A, 208A to handle the corresponding tasks (e.g. "proceed", "investigate", "consider", and "avoid"). Each of the groups 202, 204, 206, 208 occupies an area on the matrix plain that does not overlap with an area occupied by another group. An impact-effort matrix is suitable for making informed decision by balancing the impact of the tasks and the effort require to execute the tasks.

Such priority matrices may be modified for the purpose of performing the grouped scoring method. Figure illustrates an example of a modified priority matrix for determining host attack impact scores of cyber attacks (i.e. a host attack impact score matrix). The example shown in Figure has a first axis 412 representing the attack severity score, and a second axis 414 representing the host importance score. Therefore, the host attack impact score matrix differs from the matrices shown in Figure 2 and **Error! Reference source not found.** in that each of the 4 host attack impact groups 402, 404, 406, 408 is associated with a range of attack severity scores, a range of host importance scores, and a host attack impact group score 452, 454, 456, 458 (3, 4, 1, 2) associated with the corresponding host attack impact group. Such a host attack impact score matrix provides a direct visualisation of the grouped scoring method for determining the host attack impact scores described above. Table 1 summarises the ranges of attack severity scores and host importance scores of the host attack impact groups 402, 404, 406, 408 shown in Figure and their host attack impact group scores.

Table 1 - Table of ranges of attack severity scores and host importance scores, and host attack impact score associated with host attack impact groups

| Group (with arbitrary numbering) | Ranges of attack severity scores and host importance scores | Host attack impact score *(HAI)* |
|---|---|---|
| 1st group (402) | $3 \leq$ *Attack severity score* $\leq 5$; and $0 <$ *Host importance score* $< 2$ | 3 |
| 2nd group (404) | $3 \leq$ *Attack severity score* $\leq 5$; and $2 \leq$ *Host importance score* $\leq 3$ | 4 |
| 3rd group (406) | $0 <$ *Attack severity score* $< 3$; and $0 \leq$ *Host importance score* $< 2$ | 1 |
| 4th group (408) | $0 <$ *Attack severity score* $< 3$; and $2 \leq$ *Host importance score* $\leq 3$ | 2 |

Although the example shown in Figure and Table 1 comprises 4 host attack impact groups, optionally there may exist any number of host attack impact groups. Although the host attack impact scores associated with the host attack impact groups in the example shown in Figure and Table 1 ranges from 1 to 4 with a regular increment of 1, the host attack impact groups may alternatively be associated with any values of host attack impact scores. Although the example shown in Figure is in a form of a priority matrix, in other embodiments, any other suitable formats, such as a graph, a grid, or a grid may be used. Optionally, one or more of the host attack impact groups may be associated with the same host attack impact score.

The impact of each of the actions that are executable in response to one or more cyber attacks is defined as "action impact". The action impact may be determined based on effectiveness of the corresponding action and a type of action of the corresponding action, and may be expressed in a quantitative form, such as a score (i.e. action impact score).

The term "effectiveness of action" as used herein denotes the success rate of an action in the past deployments to the presented attack, and is proportional to the success rate. The effectiveness of action may be determined from a dataset of previous action deployments and their effects against attacks. Such a dataset may be labelled by human analysts or be retrieved from an impact analysis component which models the network environment with and without the action. Effectiveness of action may be expressed in a quantitative form, such as a score (i.e. effectiveness of action score).

The term "type of action" as used herein denotes the nature of an action, and is proportional to computational effort and/or computational or network resources required to execute the action. Optionally, the type of action may be divided into three types, namely, passive monitoring, active monitoring, and defensive. Type of action may be expressed in a quantitative form, such as a score (i.e. type of action score). Optionally, the type of action score of an defensive action may be higher than that of an active monitoring action, and the type of action score of active monitoring action may be higher than that of passive monitoring action (e.g. 1 for active monitoring, 2 for active monitoring, and 3 for defensive).

Accordingly, the action impact scores of each of the executable actions may be determined based on the corresponding effectiveness of action score and type of action score. Alternatively, the action impact scores of each of the executable actions may be determined by using a grouped scoring method in a similar manner as described above in relation to host attack impact score.

The said grouped scoring method for determining action impact scores comprises a step of providing a plurality of action impact groups. Each of the action impact groups is associated with a range of effectiveness of action scores and a range of type of action scores. Each of the action impact groups is also associated with an action impact group score.

Each of the executable actions is then categorised into one of the action impact groups based on its effectiveness of action score and type of action score. In other words, each of the actions is categorised into an action impact group that is associated the range of effectiveness of action scores encompassing the effectiveness of action score of the corresponding attack, and the range of type of action scores encompassing the type of action score of the corresponding action.

As a result, the action impact group score, based on the categorisation, is set as the action impact score of the corresponding action.

The said grouped scoring method may optionally be performed by using a prioritisation matrix, grid, or graph, in a similar manner as determining host attack impact score using a prioritisation matrix, grid, or graph, as described above with reference to Figure and Table 1.

Figure illustrates an example of a modified priority matrix for determining action impact scores of executable actions (i.e. an action impact score matrix). The example shown in Figure has a first axis 512 representing the effectiveness of action score, and a second axis 514 representing the type of action score. Therefore, the action impact score matrix differs from the matrices shown in Figure 2 and **Error! Reference source not found.** in that each of the 4 action impact groups 502, 504, 506, 508 is associated with a range of effectiveness of action scores, a range of type of action scores, and an action impact group score 552, 554, 556, 558 (4, 2, 3, 1) associated with the corresponding action impact group. Such an action impact score matrix provides a direct visualisation of the grouped scoring method for determining the action impact scores described above. Table 2 summarises the ranges of effectiveness of action scores and type of action scores of the action impact groups 502, 504, 506, 508 shown in Figure and their action impact group scores.

Table 2 - Table of ranges of effectiveness of action scores and type of action scores, and action impact score associated with host attack impact groups

| Group (with arbitrary numbering) | Ranges of effectiveness of action scores and type of action scores | Action impact score ($AI$) |
|---|---|---|
| 1st group (502) | $3 \leq$ *Effectiveness of action score* $\leq 5$; *and* $0 <$ *Type of action score* $< 2$ | 4 |
| 2nd group (504) | $3 \leq$ *Effectiveness of action score* $\leq 5$; and $2 \leq$ *Type of action score* $\leq 3$ | 2 |
| 3rd group (506) | $0 <$ *Effectiveness of action score* $< 3$; and $0 \leq$ *Type of action score* $< 2$ | 3 |
| 4th group (508) | $0 <$ *Effectiveness of action score* $< 3$; and $2 \leq$ *Type of action score* $\leq 3$ | 1 |

Although the example shown in Figure and Table 2 comprises 4 action impact groups, optionally there may exist any number of action impact groups. Although the action impact scores associated with the action impact groups in example shown in Figure and Table 2 ranges from 1 to 4 with a regular increment of 1, the action impact groups may alternatively be associated with any values of action impact scores. Although the example shown in Figure is in a form of a priority matrix, in other embodiments, any other suitable formats, such as a graph, a grid, or a grid may be used. Optionally, one or more of the action impact groups may be associated with the same action impact score.

The complexity involved in executing an action in response to one or more cyber attacks is defined as "action deployment complexity". The action deployment complexity may, for example, be determined based on one or more of: computing power required to execute the corresponding action, time required to execute the corresponding action, number of users required to execute the corresponding action, privilege(s) required to execute the corresponding action, and level of authorisation required to approve the corresponding action. Action deployment complexity of an action may be expressed in a quantitative form, such as a score (i.e. action deployment complexity score). Action deployment complexity of an action may be determined based on one or more user inputs (e.g. an input from an analyst or administrator of the host), and/or historical data relating to complexity involved in executing the corresponding action (e.g. number of relevant factors, such complexity involved computing power required to execute the corresponding action, time required to execute the corresponding action, number of users required to execute the corresponding action, privilege(s) required to execute the corresponding action, and/or level of authorisation required to approve the corresponding action).

The action prioritisation model may determine a priority score for each of the cations based on the host attack impact score, $HAI$, the action impact score, $AI$, and the action deployment score, $ADC$. Optionally, the priority score, PRS, may be determined by using Equation 1 below:

$$PRS = \frac{HAI \times AI}{ADC}$$

Equation 1

In view of the possibility that some of: the severity of attack, the importance of the host, the effectiveness of action, the type of action, and the action deployment complexity may not have 100% accuracy and reliability (e.g. due to insufficient data, incomplete information, human error, new network, and/or underfit/overfit machine learning model), it may be desirable to be able to take into account the level of confidence when determining the priority score. In such cases, a confidence score may be optionally taken into account when determining the priority score. The confidence score may be proportional to the certainty of the determined host attack impact score and action impact score. Therefore, Equation 1 may be modified to include the confidence score, *CON,* as shown in Equation 2 below:

$$PRS = \frac{HAI \times AI \times CON}{ADC}$$

Equation 2

In the example of Equation 2, the value of *CON* may range from any positive value that is smaller than or equal to 1. *CON* = 1 may indicate 100% certainty for the determined host attack impact score and action impact score, and near-zero *CON* value may indicate a near-0% certainty. In the example of Equation 2, *CON* cannot have a zero value, as doing so would result in 0 *PRS* value. However, in other embodiments, Equation 2 may be modified in a way that *CON* can have a 0 value (e.g. by substituting *CON* with *(CON* + (*very small number*))).

Optionally, one or more of: the severity of attack, the importance of the host, the effectiveness of action, the type of action, the action deployment complexity, and the confidence may be determined based on one or more user inputs, historical data and/or machine learning. Optionally, one or more of: the severity of attack, the importance of the host, the effectiveness of action, the type of action, the action deployment complexity, and the confidence may be multiplied by a multiplier or weighting in order to increase or decrease the corresponding factor(s)' influence on the priority score.

Table 3 shows priority scores of exemplary actions, A1, A2 and A3, calculated using Equation 2.

Table 3 - Table of priority scores of exemplary actions A1, A2 and A3

| Action ID | HAI | AI | CON | ADC | PRS |
|-----------|-----|-----|-----|-----|-----|
| A1 | 3 | 2 | 3 | 1 | 18 |
| A2 | 1 | 3 | 2 | 1 | 6 |
| A3 | 2 | 3 | 3 | 2 | 9 |

The action prioritisation model, based on the determined priority scores of a plurality of actions, may generate a prioritisation recommendation 120. The prioritisation recommendation provides a recommended sequence for executing the actions, based on the priority score PRS. The prioritisation recommendation may be or may comprise a list of actions 120 arranged in an order of recommended execution.

Optionally, one or more of the actions included in the prioritisation recommendation may be communicated to one or more actuators 152 or inputs of one or more devices and/or systems in order to automatically execute at least one of the one or more of the actions. Optionally, the full list of actions 120 arranged in the order of recommended execution may be transmitted to one or more devices accessible by one or more users. Optionally, the list of actions 120 may be transmitted to the devices with user instructions for executing the actions. Alternatively, only a part of the list of actions 120 including only one or more actions that require immediate execution may be transmitted to one or more devices accessible by one or more users in order to enable the one or more users to execute the actions. Therefore, the action prioritisation model may form a part of and/or be connected to an active IRS and/or a passive IRS.

It will be understood by those skilled in the art that the apparatus that embodies the invention could be a general purpose device (or group of devices) having software arranged to provide an embodiment of the invention. Furthermore, any or all of the software used to implement the invention can be contained on various storage mediums such as a floppy disc, CD-ROM, or magnetic tape so that the program(s) can be loaded onto one or more general purpose devices, or could be downloaded over a network.

The computer-implemented method described above may be implemented in a form of computer program. The computer program may be stored in at least one memory of at least one computer system. The computer system may also comprise at least one processor configured to perform the computer program. Optionally, the computer system may be connected to and/or form a part of the computer network.

**Claims**

1. A computer-implemented method for providing an action prioritisation recommendation in response to a cyber attack on a system comprising one or more hosts, the method comprising the steps of:

   determining a plurality of host attack impact scores for attacks on one or more hosts, each host attack impact score being determined based on the severity of the corresponding attack and an importance of the targeted host;
   determining a plurality of action impact scores for actions that are available to be executed in response to each of the attacks, each action impact score being determined based on the effectiveness of the corresponding action and a type of action of the corresponding action;
   determining a plurality of action deployment complexity scores for each of the corresponding actions; and
   determining a priority score for each of the actions based on the host attack impact score, the action impact score, and the action deployment complexity score; and
   generating the action prioritisation recommendation providing a recommended sequence for executing the actions, wherein the recommended sequence prioritises the actions according to the priority scores.

2. The method of claim 1, wherein determining a host attack impact score comprises the steps of:

   providing a plurality of host attack impact groups, each of the plurality of host attack impact groups being associated with:

      a range of attack severity scores,
      a range of host importance scores, and
      a host attack impact group score associated with a corresponding host attack impact group;

   categorising each of the attacks into one of the plurality of host attack impact groups associated with:

      the range of attack severity scores encompassing the attack severity score of the corresponding attack; and
      the range of host importance scores encompassing the host importance score of the host targeted by the corresponding attack; and

   setting the host attack impact group score as the host attack impact score of the corresponding attack.

3. The method of claim 2, wherein the host attack impact score is determined by using a host attack impact score graph or a host attack impact score matrix comprising:

   a first axis representing the attack severity score;
   a second axis representing the host importance score; and
   a host attack impact graph plain having a plurality of host attack impact group areas, each of the host attack impact group areas being associated with the range of the attack severity scores, the range of the host importance scores, and the host attack impact group score.

4. The method of any of the preceding claims, wherein determining an action impact score comprises the steps of:

   providing a plurality of action impact groups, each of the plurality of action impact groups being associated with:

      a range of effectiveness of action scores,
      a range of type of action scores, and
      an action impact group score associated with a corresponding action impact group;

   categorising each of the actions into one of the plurality of action impact groups associated with:

the range of effectiveness of action scores encompassing the effectiveness of action score of the corresponding action; and

the range of action type scores encompassing the action type score of the corresponding action; and

setting the action impact group score as the action impact score of the corresponding action.

5. The method of claim 4, wherein the action impact score is determined by using an action impact score graph or an action impact score matrix comprising:

a first axis representing the effectiveness of action score;

a second axis representing the type of action score; and

an action attack impact graph plain having a plurality of action impact group areas, each of the action impact group areas being associated with the range of the effectiveness of the action scores, the range of the type of the action scores, and the action impact group score.

6. The method of any of the preceding claims, wherein the type of action is selected from one of: passive monitoring, active monitoring, and defensive action,

wherein the passive monitoring has lower level of resources required than the active monitoring, and

active monitoring has lower level of resources required than the defensive action.

7. The method of any of the preceding claims, wherein the action deployment complexity scores are based on: computing power required to execute the corresponding action, time required to execute the corresponding action, number of users required to execute the corresponding action, privilege(s) required to execute the corresponding action, and/or level of authorisation required to approve the corresponding action.

8. The method of any of the preceding claims, wherein one or more of: the severity of attack, the importance of the host, the effectiveness of action, the type of action, and the action deployment complexity are determined based on one or more user inputs, historical data and/or machine learning.

9. The method of any of the preceding claims, wherein the priority score, *PRS,* is determined as:

$$PRS = \frac{HAI \times AI}{ADC}$$

wherein *HAI* is the host attack impact score, *AI* is the action impact score, and *ADC* is the action deployment complexity score.

10. The method of any of claims 1-8, wherein the method, prior to determining the priority score, further comprises a step of:
determining a confidence score based on a certainty of the determined host attack impact score and action impact score.

11. The method of claim 10, wherein the priority score, *PRS,* is determined as:

$$PRS = \frac{HAI \times AI \times CON}{ADC}$$

wherein *HAI* is the host attack impact score, *AI* is the action impact score, *CON* is the confidence score, and *ADC* is the action deployment complexity score.

12. The method of any of the preceding claims, wherein the method further comprises a step of executing the actions according to the recommended sequence for executing the actions.

13. The method of any of the preceding claims, wherein the method further comprises a step of notifying one or more users of the recommended sequence for executing the actions.

**14.** A computer system configured to perform the method of any of claims 1 to 13.

**15.** A non-transitory computer readable medium having stored thereon a computer program that, when run on a system according to claim 14, causes the system to perform the method of any of claims 1 to 13; and/or a computer program that, when run on a system according to claim 14, causes the system to perform the method of any of claims 1 to 13.

FIG 1

High

212

Variable Y

Action 1
202A

202

Action 2
204A

204

Action 3
206A

206

Action 4
208A

208

Low

High

Variable X

214

FIG 2

FIG 3

FIG 4

FIG 5

**EUROPEAN SEARCH REPORT**

Application Number

EP 23 15 6782

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOURKI NEJAT SIROUS ET AL: "An Adaptive and Cost-Based Intrusion Response System", CYBERNETICS AND SYSTEMS, vol. 48, no. 6-7, 14 July 2017 (2017-07-14), pages 495-509, XP093067738, US ISSN: 0196-9722, DOI: 10.1080/01969722.2017.1319693 * figures 1-2 * * abstract * * paragraph [Introduction] * * paragraph [TheProposedApproach] * * paragraph [ASampledResponseSelection] *<br>----- | 1-15 | INV.<br>H04L9/40 |
| X | CHOUHAN PUSHPINDER KAUR ET AL: "A Cost Based Dynamic Response Method for Internet of Things Cyberattacks", 2021 9TH INTERNATIONAL SYMPOSIUM ON DIGITAL FORENSICS AND SECURITY (ISDFS), IEEE, 28 June 2021 (2021-06-28), pages 1-6, XP033944861, DOI: 10.1109/ISDFS52919.2021.9486362 [retrieved on 2021-07-14] * figure 4 * * abstract * * paragraph [0III] * * paragraphs [IV.B] - [IV.C] * * paragraph [000V] *<br>-----<br>-/-- | 1-15 | |

| | |
|---|---|
| | TECHNICAL FIELDS SEARCHED (IPC) |
| | H04L<br>G06F |

The present search report has been drawn up for all claims

| Place of search | Date of completion of the search | Examiner |
|---|---|---|
| Munich | 28 July 2023 | Jeampierre, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 23 15 6782

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROY DHARANI K ET AL: "A Taxonomy of state of the art in Intrusion Response System", 2022 INTERNATIONAL CONFERENCE ON FUTURISTIC TECHNOLOGIES (INCOFT), IEEE, 25 November 2022 (2022-11-25), pages 1-8, XP034329819, DOI: 10.1109/INCOFT55651.2022.10094333 [retrieved on 2023-04-13] * paragraph [III.A] * ----- | 1-15 | |

TECHNICAL FIELDS
SEARCHED      (IPC)

The present search report has been drawn up for all claims

| Place of search | Date of completion of the search | Examiner |
|---|---|---|
| Munich | 28 July 2023 | Jeampierre, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)